# EUROPEAN PATENT APPLICATION

(11) **EP 3 246 901 A1**
(43) Date of publication of application: **22.11.2017**
(21) Application number: 16737098.0
(22) Date of filing: 25.02.2016
(51) Int. Cl.: G09F 9/33

(54) **FULLY ZERO-MULLION VIDEO WALL SYSTEM PROVIDING FULL PIXEL COVERAGE WHEN JOINED**

(30) Priority: 14.01.2015 CN 201510019462
(71) Applicant: Ding, Weikang, Shanghai 200072 (CN); Xia, Zhanmin, Shanghai 200060 (CN)
(72) Inventor: Ding, Weikang, Shanghai 200072 (CN); Xia, Zhanmin, Shanghai 200060 (CN)
(74) Representative: Karaahmet, Erdogan
(86) International application number: PCT/CN2016/074504
(87) International publication number: WO 2016/112873

(57) **Abstract**

The present invention relates to construction of a video wall system. The system is formed by splicing single body of display screens together, and the spliced video wall performs "fully seamless" display, namely, **"complete pixel coverage"** is realized in any display area of the video wall, and the video wall becomes a display system having no **"joints/seams on the screen surface"** and no **"joints/seams between screens";** and the display screen constructed with the video wall system of the present invention is a **"spliced seamless screen":** namely, a display screen which is "seamed before splicing" and **"fully seamless** after splicing".

## Description

### Technical Field

The present invention relates to construction of a video wall system. The system is formed by splicing single body of display screens together, and the spliced video wall is "fully seamless", namely, **"complete pixel coverage"** is realized in any display area of the video wall, and the video wall becomes a display system having no **"joints/seams on the screen surface"** and no **"joints/seams between screens";** and the display screen constructed with the video wall system of the present invention is a **"spliced seamless screen":** namely, a display screen which is "seamed before splicing" and **"fully seamless** after splicing".

### Background

Today, a display technology has been fully integrated into our work, life, entertainment and other fields, such as mobile phones, iPads, computers, TVs and leisure and entertainment equipment; transportation tools, shopping malls, and indication and notification systems of public places; and office equipment, monitoring equipment and all kinds of equipment.

There are many kinds of display screens formed by different display technologies, such as projection, LED, Liquid Crystal Display, OLED and QLED (Quantum Dot) display screens. A Liquid Crystal Display screen is used most widely at present, and the digital Full High-Definition(FHD) (1920 x 1080) video standard is determined by virtue of the development of the Liquid Crystal Display screen. Meanwhile, a 4KUltra High-Definition (UHD) (3820 x 2160) display screen comes true. In a digital high-definition technology, OLED and QLED (Quantum Dot) display screens are rising stars, and their appearance will lead a new generation of display technology to vigorously develop.

Currently, digital FHD and UHD are mainly reflected in an LCD screen, an OLEDdisplay screen and a QLED (Quantum Dot) display screen (the "display screen"mentioned herein covers the LCD screen, the OLED display screen and the QLED Quantum Dotdisplay screen, and the method of the present invention can be directly applied to the "display screens", wherein QLED is a Nanoscale Quantum Luminescent "display screen").

In the past, the display screen was mainly used for a TV set and a personal computer, and limited to singe and individual use. As the development of the display technology, the LCD screen breaks through the limitation of single use, and moves towards the application of splicing into a video wall using a single LCD screen; and the application field of the LCD screen is also rapidly developed therewith.

However, people encounter difficulties when needing a digital FHD display screen with larger size, such as digital FHD display screens having hundreds ofinches (several meters of height, and dozens of meters of length). Generally, the LCD screenwhich is more than 120 inches does not have good economy, because the price of the LCD screen is sharply increased due to raw materials, production equipment, a plant, yield, transportation and risk thereof. The cost increase is ascended in a series form according to the size of the area of the LCD screen, causing that the LCD screen loses the reasonable economy and is not widely accepted by the market.

In the beginning of the century, an "LCD spliced screen" appeared. Different from an ordinary TV set, the "bezel/frame" of the LCD spliced screen is very "narrow", generally about several millimeters. Thus, a plurality of "LCD spliced screens" can be used for splicing into the video wall of which the area is much larger than that of a single one, thereby, meeting the market need.

Another characteristic of the "LCD spliced screen" is that the price of the video wall spliced with the "LCD spliced screens" has a linear relationship with the size of the area thereof, namely, the price of unit area is generally kept unchanged, besides that the "bezel/frame" is very "narrow". Therefore, the"LCD spliced screen" has good economy, is widely accepted, and applied to various fields.

The digital FHD and UHD LCD screens, the OLED display screen and the QLED display screen need to transmit video signals to a pixel in a "displayregion". Therefore, a "transmission edge" of a transmission signal needs to be reserved around the "displayregion", and cannot display video images no matter how "narrow" the "edges" are. Meanwhile, the "displayregion" of the display screen needs to be supported by a structure. Therefore, a "structural bezel/frame" is also reserved. Usually, the "transmission edge" and the "structural bezel/frame" are not at the same wide, and meanwhile, have no pixel and do not display the video images. In the present invention, the collection of the "transmission edge" and the "structural bezel/frame", which has no pixel and does not display the video images, is called as " joints/seams on the screen surface", namely, a "bezel/frame" which is "inherent" and produces "joints/seams" in the video wall because the transmission signal and the structure bezels/frames are irredundant. The "bezel/frame" which does not display thevideo images also exists actually on the surface of the display screen even if it is not used for splicing. This kind of display screens is called as a "seamed spliced screen" or a "seamed display screen" in the present invention, and this kind of "joints/seams" is called as the "joints/seams on the screen surface".

On the other hand, because the "joints/seams on the screen surface" occupy the position of thepixel in the video wall, when the video images are inputted into the single "seamed spliced screen", the "joints/seams on the screen surface" are firstly "assumed" to be capable of displaying the video images and then the video signals inputted onto the "joints/seams on the screen surface" are "cut" off, namely, the "joints/seams on the screen surface" are firstly "assumed" to not be provided on the video wall and the video images can be "completely" played, and then, the video imageon the position of "joints/seams on the screen surface" are "lost", due to having no pixel on it which fails to display the video images. Otherwise, the original video images will be "squeezed out" by the "joints/seams on the screen surface", causing the "split" and the deformation of the video images.

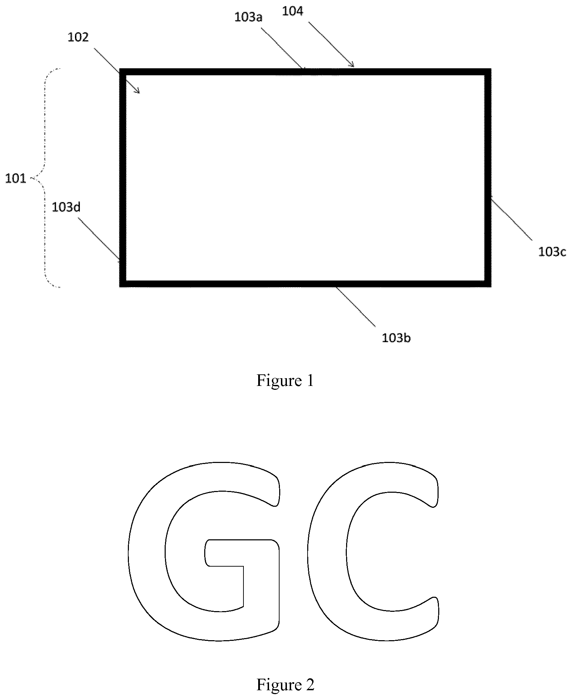

The "seamed spliced screen" 101 shown in Figure 1 comprises a "display region" 102 and "joints/seams on the screen surface" 103a, 103b, 103c and 103d without pixel. A boundary of the outline of the "seamed spliced screen" 101 is shown in 104.

If "seamed spliced screen" 101 is used for displaying the video images in Figure 2,the display result is shown in Figure 3: the video images fill the whole "display region" 102, and the video signals are not "lost"; but if the "seamed spliced screen" 101 is used for splicing, the original video images shall be amplified to fill the "display region" 102 and the "joints/seams on the screen surface" 103a, 103b, 103c and 103d to the boundary 104,the outline of the display screen, and not merely fill the "display region" 102 itself, as shown in Figure 4.

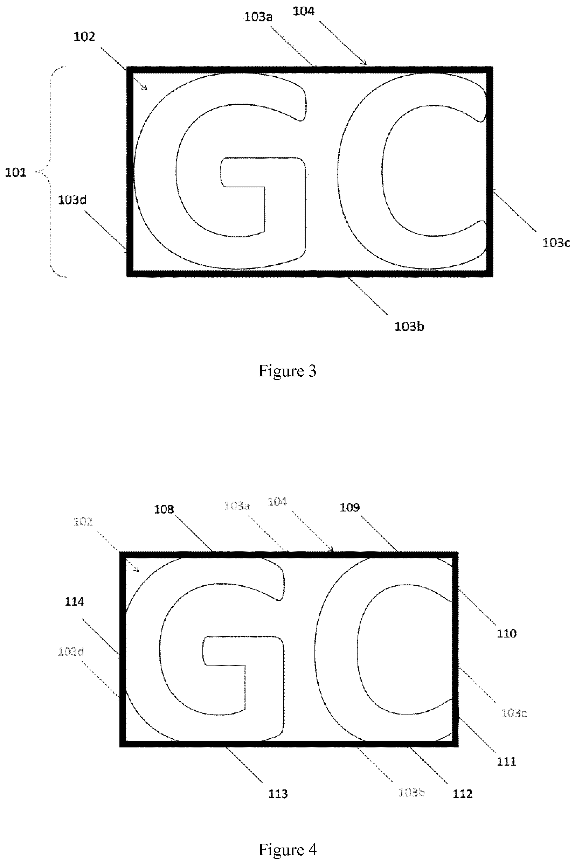

The video images on positions 108, 109, 110, 111, 112, 113 and 114 in Figure 4 are superposed by the "joints/seams on the screen surface" 103a, 103b, 103c and 103d. Therefore, the video signals need to be "cut" off when inputting the signals, so as to prevent the original video images on the video wall from "splitting". A "black seam" is formed by the "joints/seams on the screen surface" 103a, 103b, 103c and 103d which have no pixel and do not display the video images in the video wall, i.e. commonly called "seamed splicing".

Therefore, when thevideo wall spliced with the "seamed spliced screen" displays the video images, one of losing the original video images on the"joints/seams on the screen surface" and the "split" original video images can be selected only. Mean while, the "joints/seams on the screen surface" 103 having no pixel and video images are presented in the video wall, regardless of selecting any one.

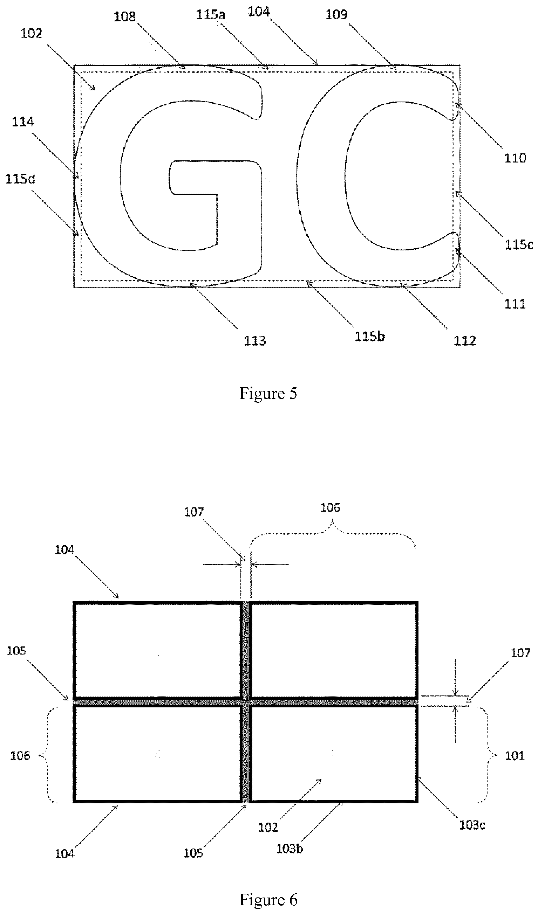

Currently, there are some methods for solving the "joints/seams on the screen surface" which generally can be classified into two kinds:
1. Passive (optical) method: the method refers to additionally overlaying an "optical prism" on a spliced edge (after splicing). When people see the video wall vertically to the "display region", the "joints/seams on the screen surface" 103 are reduced (narrowed, but still presented) by the "optical prism". However, the method cannot avoid the disadvantage that the "joints/seams on the screen surface" 103 are enlarged (widened, wider than the original "joint/seam") when people see side way sinstead of vertically to the "display region". The key is that: the "lost" video images 108-114 on the "joints/seams on the screen surface" 103 cannot be restored, or the split of the video images cannot be prevented no matter how the "joints/seams on the screen surface" 103 are "narrowed" or "widened" by the "optical prism".
2. Active (electronic) method: the method refers to directly "covering/implanting" the pixel on the "joints/seams on the screen surface" 103a, 103b, 103c and 103d of the "seamed spliced screen", and building the "joints/seams on the screen surface" 103 which have no pixel and cannot display the video images into 115a, 115b, 115c and 115d which can display the video images, as shown in Figure 5, thereby "restoring" to display the "lost" "video images" 108-114. The display screen is called as the "seamless screen before splicing" in the present invention.

The maximum characteristic of the "seamless screen before splicing" is the display of the original video images corresponding to the pixel in any area with in the outline of the single display screen, so that the original video images can fill any area with in the outline of the display screen and are displayed completely.

Apparently, the problem of the "joints/seams on the screen surface" of the "seamed spliced screen" is well solved by the active (electronic) method.

However, the"seamless screen before splicing" cannot solve the problem of "splicing gaps" encountered when the display screens are "spliced" into the video wall, because the "seamless" problem is solved by taking the single display screen as an object, and "assuming" that display boundaries between the "seamless screens before splicing" can realize the "seamless meshing" by "splicing" without being perceived easily, which is not realized in fact.

As shown in Figure 6, the "splicing gaps" refer to: "joints/seams" produced because a boundary 104 between the single display screen and another screen cannot be fully "closed and meshed" when a plurality of single display screens are used for splicing into the video wall, as shown in a shaded area 105 of Figure 6. Or, the "joints/seams" can be gaps produced because the size of the spliced video wall is too big (splicing of a minimum of more than 10, a maximum of dozens of and even hundreds of single display screens), or gaps reserved due to considering the temperature change and other factors, or gaps produced due to the error of the boundary of the outline of the single display screen, and the like. Apparently, the "splicing gaps" have no pixel and do not display the video images, and are usually expressed in the form of "black seam(s)". The "splicing gaps" are called as "joints/seams between screens" in the present invention, so as to distinguish from the "joints/seams on the screen surface".

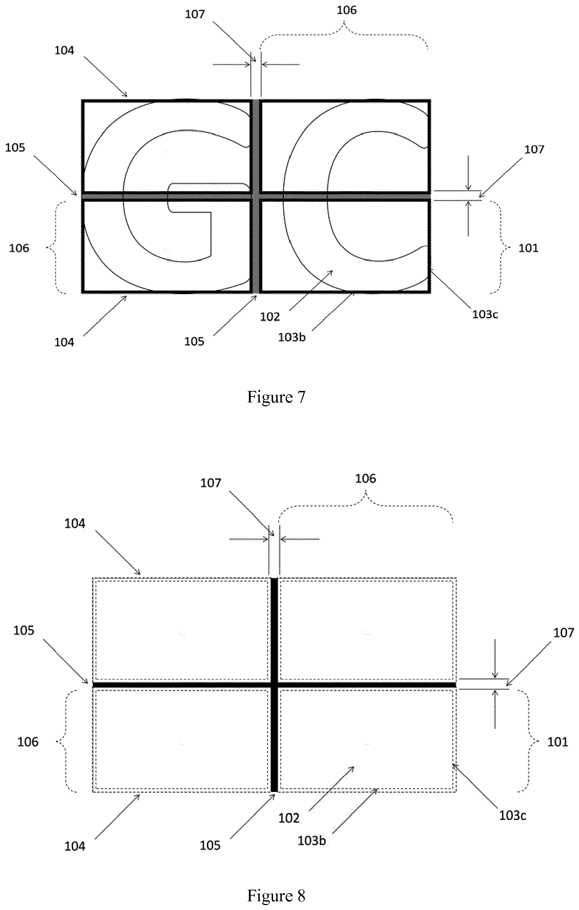

The nature of the problem of the "joints/seams between screens" when using the video wall spliced by the "seamed spliced screen" is not serious, and the "joints/seams on the screen surface" which originally have no pixel and do not display the video images become a little wide at most (sometimes, for the sake of installation, gaps are also especially reserved between the screens, as shown in Figures 6 and 7.

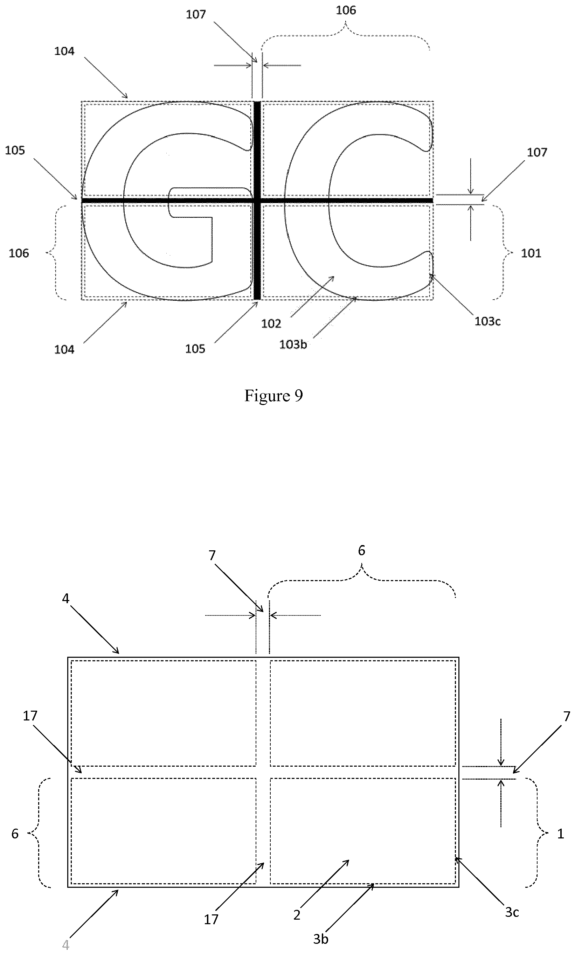

However, the "joints/seams between screens" are "highlighted" due to the video display around them in the video wall spliced with the "seamless screen before splicing", and a new "black seam" which is incompatible with the original intention of "seamless spliced screen" is produced, as shown in Figure 8; and the display effect of the "joints/seams between screens" is difficult to "be perfect", as shown in Figure 9. Apparently, the "seamless screen before splicing" itself has no area not displaying the images, but due to the existence of "joints/seams between screens" 105, the "seamless screen before splicing" is dragged back to the original position of "seamed spliced screen", causing a final failure. The joints/seams are simply not "inherent" "joints/seams on the screen surface" of the display screen, but produced by "gaps between screens" when splicing. Therefore, the "seamless screen before splicing" is helpless for the "joints/seams between screens".

### Summary of the Present Invention

The purpose of the present invention is to overcome the problem in the prior art that the video wall presents joints/seams. The method breaks through the limitation of taking a single display screen as a research object, thereby building a "fully seamless" display system with "complete pixel coverage" by using a video wall as an object. The present invention designs a "fully seamless"video wall system which comprises a video wall formed by display screens arranged in a matrix, and is characterized in that: joints/seams between all adjacent display screens are covered by an "active display bar" with a pixel, i.e., "complete pixel coverage"; and the active display bar not only covers "joints/seams between screens, but also covers "joints/seams on the screen surface", and is a kind of screen with "merging" treatment as an integrated display, namely that two "joints/seams on the screen surface" and one "joints/seams between screens" subordinated to the two adjacent display screens are not separately and individually treated and displayed even if the natures, positions and auxiliary screen bodies of the three joints/seams are different, and also namely that, "display regions" of the display screens are effectively integrated in display by only one "integrated" active display bar to form an original video image. The active display bar can be "rectangular", in additionto be "cross-shaped"; and grid lines formed by the joints/seams between the display screens are covered by a plurality of rectangular active display bars arranged in a matrix, and the same as that of the "cross-shaped" active display bars, the "rectangular" active display bar is a kind of screen with "merging" treatment as an integrated display and used for covering the "joints/seams between screens" and the "joints/seams on the screen surface" at the same time. A new display area is formed by the "rectangular active display bar" and the display region of the original display screen, and biased with the display region of the original display screen, or with the screen body of the original display screen. The active display bar fully covers/overlaps "bezels/frames" of two right-angle sides of the display screen itself in the boundary of the screen body, and bulges at two sides of the part outside the boundary of the screen body of the active display bar cross/overlapping the "joints/seams between screens" and cover "bezels/frames" of the two adjacent display screens. Bezel/frames left on an opposite angle of the "rectangular active display bar" waits to be covered/overlapped by the "rectangular active display bar" of another group of adjacent spliced screen, and the "rectangular active display bar" is integrated into the display screen itself. The new display area takes initial display of two sides without "rectangular active display bar" in the display region of the original display screen as a basic and starting line, and the video images are "unidirectionally" amplified and filled towards the boundary with the "rectangular active display bar" in the new display area. A section of the built "rectangular active display bar" is in a "T"-shaped structure, and a flexible circuit of "coverage" pixel included by the "rectangular active display bar" is "T"-shaped and stretched down from the middle part of a pixel matrix. Two layers of steel plates are arranged inside andoutsidethe built "rectangular active display bar", an outside upper bent opening faces outwards, and an inside upper bent opening faces inwards. The outside upper bent opening and the inside upper bent opening are connected with a "holding cover" through "hooks" and"feet" respectively; a "T" section is built, the "hooks" of the "holding cover" can be disconnected after the outside steel plate of the "rectangular active display bar" rotates towards the screen body "outside the boundary", and the flexible circuit and the pixel matrix thereof are taken down; and when the "hooks" are buckled to rotate towards "inside the boundary" of the screen body and fastened with the inside steel plate, the "holding cover" can be "locked", so that the "holding cover" has no offset up and down and inside and outside relative to the same and also has no deflection relative to a horizontal section of the same, and thus, a stable "T"-shaped "rectangular active display bar" is formed and integrated into the display screen. The "holding cover" is in a bi-color structure, the entity of the "holding cover" is "milky white" light-difusion and nonopaque material, and the top and surfaces of both sides of the "holding cover" are "black" or close to "black"; and the black cover is very thin, so that the "holding cover" presents "black" when thepixel is not luminescent, and does not fully shield the display light of the pixel when the pixel is luminescent, thereby guaranteeing that the display images can be fully displayed on the pixel matrix.

In order to ensure that the "bulges" can completely cover the "joints/seams on the screen surface" for "meshing" the adjacent spliced screens, an accurate positioning system is arranged; and 2 pairs of upper and lower and left and right "abutting platforms" and 2 pairs of upper and lower and left and right "locking platforms" are arranged on the structure of a back of the screen body, and respectively used for "positioning" and "locking", for the installation of eithera " screen in landscape" ora " screen in portrait". The abutting platform is characterized in that: a precision "guide sleeve" is arranged in the "abutting platform" and taken as "positioning" and "connection" between column screens; a "guide pillar" penetrates through a "guide sleeve" and the "guide sleeve" and a "guide pillar" are connected into "through shafts" communicating the columns of the display screen by a "lock sleeve"; and during installation, when the "guide pillar" with a taper head penetrates through the "guide sleeve" of the adjacent display screens from the "guide sleeve" of one display screen, the "bulges" of the display screen are accurately "meshed" with the front and rear of the "rectangular active display bar" of another screen, and meanwhile, the "bulges" are not damaged when splicing. When the "front maintenance and front installation" of the "spliced seamless screen" is built: the column of the video wall is rotated in a horizontal plane around vertical "through shafts" in a "whole column" or "whole column segmentation" manner, so that the "bulge" of the column obtains front and rear installation and maintenance spaces of the screen body with the way of coming away the "joints/seams on the screen surface" of the adjacent columns in the "whole column" or "whole column segmentation" manner in a vertical direction. In order to guarantee the strength and rigidity in which the "whole column" or "whole column segmentation" of the video wall rotates around the vertical "through shafts" in the horizontal plane, a "integral frame" structure and an "anti-shearing structure" by taking a cover plate on the back of the screen body as a "shear web" are arranged behind the screen body; and the column of thevideo wall is built into "column" shearing resistance by the "through shafts" and a "locking platform", so that the column can rotate in the "whole column" or "whole column segmentation" manner, without damaging the display screen.

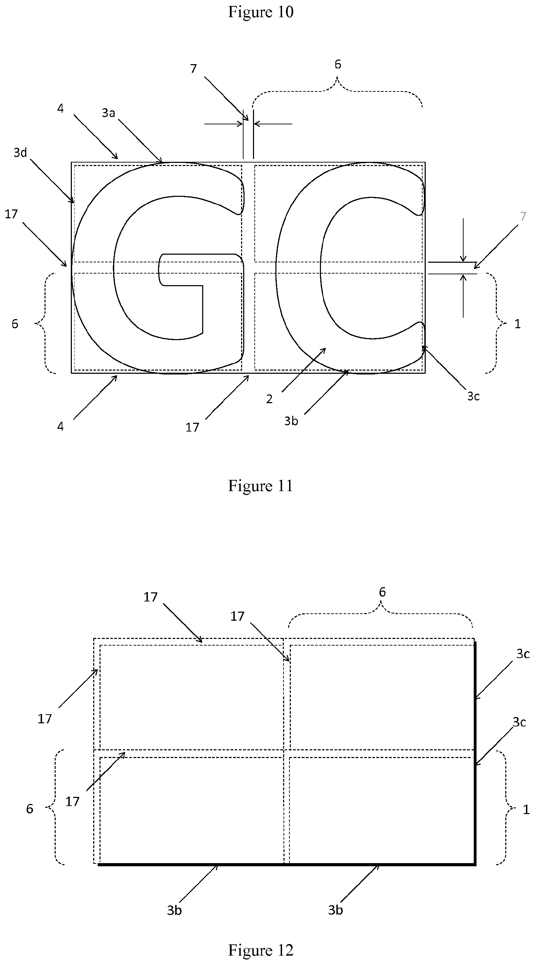

Specifically, the core system of a "fully seamless "video wall system of the present invention comprises a video wall formed by display screens arranged in a matrix, and is characterized in that: joints/seams between all adjacent display screens are covered by a "active display bar"; a "seamed spliced screen" further comprises two "bezels/frames" covering the two adjacent display screens, as shown in Figure 10; and the width 7 of the "active display bar" 17 is greater than or equal to the sum of three "joints/seams", i.e. a "gap" (as shown in 105 of Figure 6) between the adjacent spliced screens and two "bezels/frames" of the adjacent display screens. A pixel is "implanted" into the "active display bar" 17, and the three "joints/seams" are subjected to "merged treatment" as an integrated display", namely that the three "joints/seams" are not treated and displayed separately even if the natures, positions and auxiliary screen bodies of the three "joints/seams" are different, as shown in Figure 11 (wherein these three "joints/seams" refer to: 3a, 105 and 3b in Figure 6; or 3c, and 105 and 3d in Figure 6). In this way, "display regions" 2 of the display screen are effectively "integrated" into a whole through only one integrated "active display bar" 17, thereby forming original video images and substantially breaking through the separate making of the prior art, classification of different screen bodies, gap splicing display, and difficult "integration" of the video images between "edges", and impossibility of overcoming the limitation of "gaps between screens" (as shown in 105 of Figure 6).

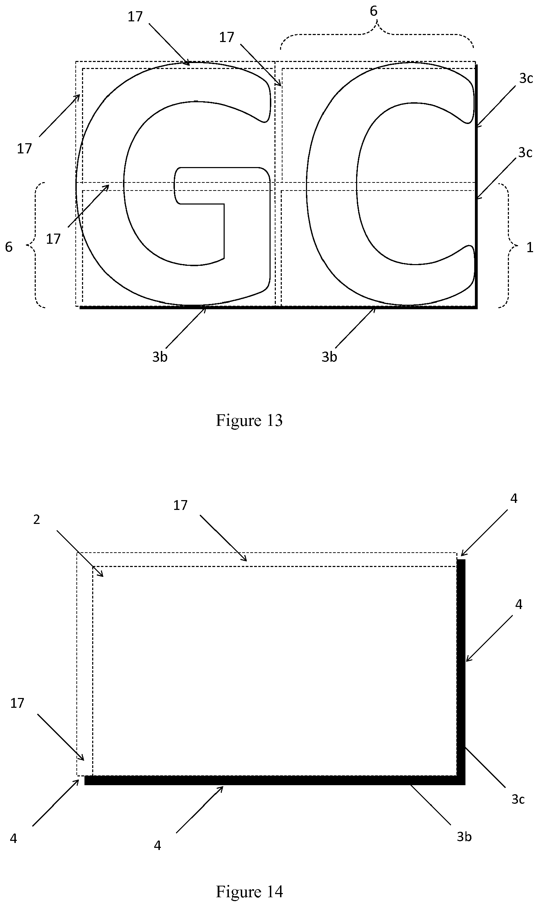

In order to "cover" the "active display bar" 17 on the "joints/seams" of the video wall, the "active display bar" can be "rectangular", in addition to be "cross-shaped" above, namely, all "joints/seams" between all adjacent display screens are covered by a plurality of "rectangular active display bars" 17arrangedin a matrix, as shown in Figure 12. The width (as shown in 7 of Figure 11) of two sides of the "rectangular active display bars" 17 is greater than or equal to the sum of width of three "joints/seams", i.e. the "gap" (as shown in 105 of Figure 6) between the adjacent display screens and two "bezels/frames" of two display screens; and the length of two sides of the "rectangular active display bars" is just connected with another "rectangular active display bar" of the adjacent display screens. The "rectangular active display bar" is characterized in that: "bezels/frames" 3a and 3d of two right-angle sides of the display screen 1 of the "rectangular active display bar" are "covered" inside two sides of the same, two sides outside the "rectangular active display bar" are "highlighted" on a boundary 4 of the display screen 1 of the same, two "bulges" are formed, and "bezels/frames" 3b and 3c of the two adjacent display screens 6 are covered and "overlapping" the "joints/seams between screens" (as shown in 105 of Figure 6), "bezels/frames" 3b and 3c reserved on an opposite angle of the "rectangular active display bar" are kept unchanged and waited to be covered by the "rectangular active display bar" 17 of another group of adjacent spliced screens 6, and the "rectangular active display bar" 17 is integrated on the display screen 1 of the same, and the spliced video wall is shown in Figure 13.

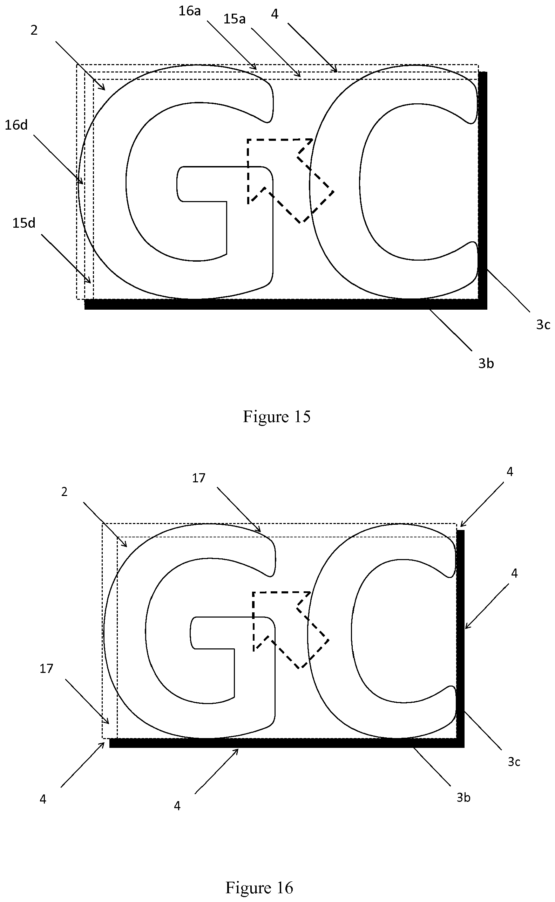

In this way, a "new" display area is formed by the "rectangular active display bar" 17 and a "display region" 2 of the display screen 1 itself, as shown in Figure 14. The "new" display area is characterized in that: the new display area is "misplaced" or "biased" with the original "display region" 2 in the display screen 1 itself, and covers the "joints/seams between screens" 105 in Figure 6; and the new display area takes initial display of two sides 3b and 3c without "rectangular active display bar" 17 in the original "display region" 2 as a basic and starting line, and the video images "unidirectionally" fill towards the boundary with the "rectangular active display bar" 17 in the new display area and are amplified, as shown in Figure 15, which is obviously different from the "seamed spliced screen" or "seamless screen before splicing" which is amplified and filled from the center to the periphery (as shown in Figures 4 and 5).

A pixel "implanted" on the "active display bar" can be composed of an LED dot matrix, an OLED bar and a QLED bar, and controlled by a corresponding display electronic circuit. Generally, the thickness of the "active display bar" can be controlled at about 1mm to 3mm, and for a video wall with the width of several meters or dozens of meters, the height difference between the "active display bar" 17 and the "display region" 2 is about 1/1000 for 1m to 3m appearance. Therefore, a good "fully seamless" display effect can be obtained.

For the sake of description, the "active display bar" is "covered" at the top left corner of the display screen in the present invention, which does not affect the principle that the method of the present invention can "cover" the active display bar at any corner of the display screen.

### Description of Drawings

Figure 1. Diagram of a "seamed spliced screen" and "joints/seams on the screen surface" thereof;
Figure 2. Example of original video images;
Figure 3. Diagram for display of the original video images on a single "seamed spliced screen";
Figure 4. Diagram for display of the original video images on the "seamed spliced screen" for splicing;
Figure 5. Diagram for display of the original video images on a "seamless screen before splicing";
Figure 6. Diagram of "joints/seams between screens" presented when splicing a display screen;
Figure 7. Diagram for display of the original video images on a video wall with the "joints/seams on the screen surface" and the "joints/seams between screens";
Figure 8. Diagram for the video wall spliced by the "seamless screen before splicing" with the "joints/seams between screens";
Figure 9. Diagram for play of the original video images on the video wall of the "seamless screen before splicing" with the "joints/seams between screens";
Figure 10. Diagram for "complete coverage" joints/seams of an active display bar on the video wall of the present invention;
Figure 11. Diagram for play of the original video images on the video wall "covered" by the active display bar of the present invention;
Figure 12. Diagram for the "complete coverage "video wall of the "rectangular" active display bar of the present invention;
Figure 13. Diagram for the original video images displayed by the "complete coverage" video wall of the "rectangular" active display bar of the present invention;
Figure 14. Diagram for composition of "rectangular" active display bar of the present invention on the original display screen;
Figure 15. Diagram for display of a new display area built by the "rectangular" active display bar and a display region of the original display screen of the present invention;
Figure 16. Diagram for bias of the new display area and the display region of the original display screen of the present invention;

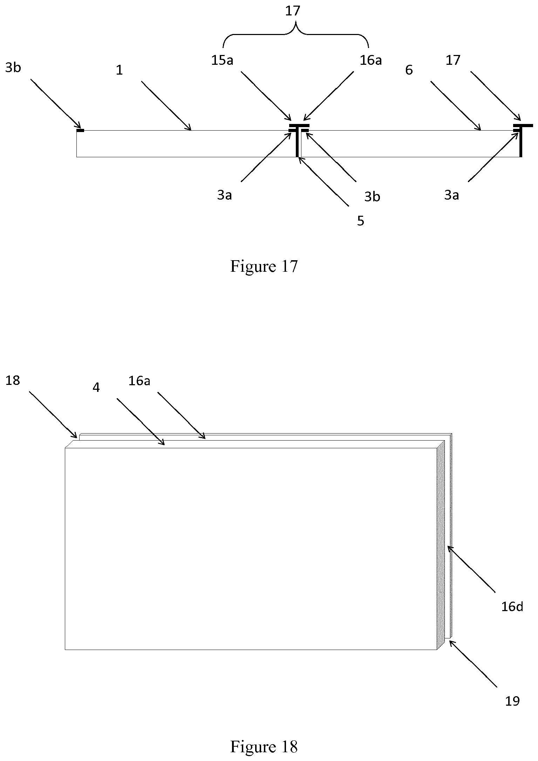

Figure 17. Diagram for a splicing section of a "spliced seamless screen" of the present invention;
Figure 18. Diagram for back vision of the "spliced seamless screen" of the present invention;

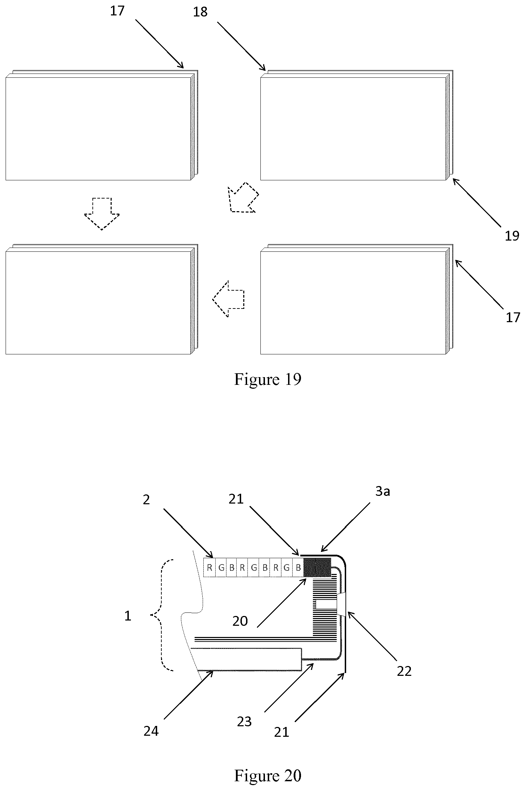

Figure 19. Splicing diagram for back vision of the present invention;
Figure 20. Diagram for a section of the "seamed spliced screen";

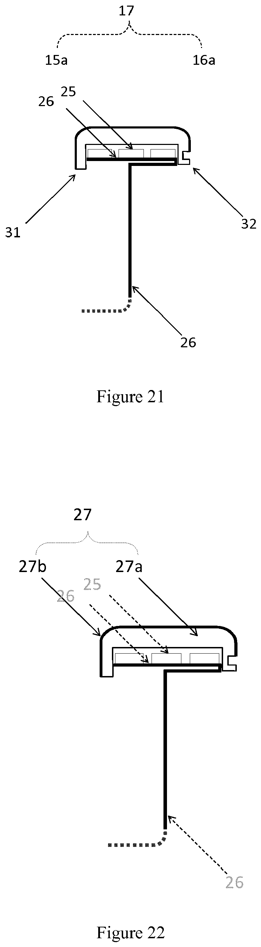

Figure 21. Diagram for a section of a pixel matrix and a flexible circuit in "T"-shaped "pixel coverage" of the present invention;
Figure 22. Diagram for a section of a "holding cover" in the "T"-shaped "pixel coverage" of the present invention;

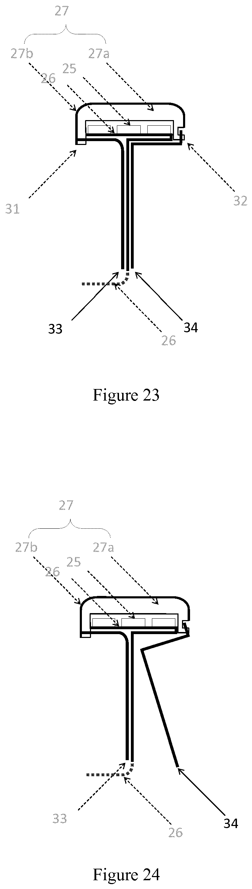

Figure 23. Diagram for a section of internal and external steel plates in the "T"-shaped "pixel coverage" of the present invention;
Figure 24. Diagram for a section of "fastening" and "taking down" of an upper external steel plate of the present invention on the "holding cover";

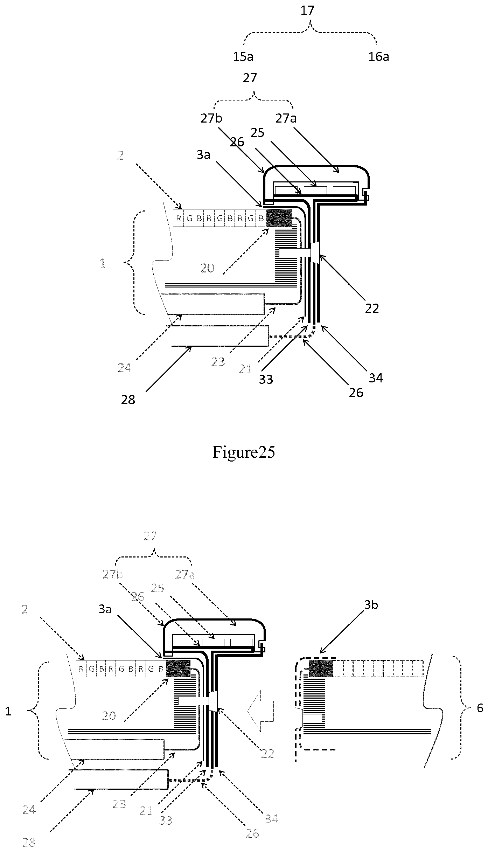

Figure 25. Diagram for a section of integrating the "pixel coverage" of the present invention into the display screen;
Figure 26. Diagram that the "spliced seamless screen" of the present invention waits for splicing the adjacent display screens;

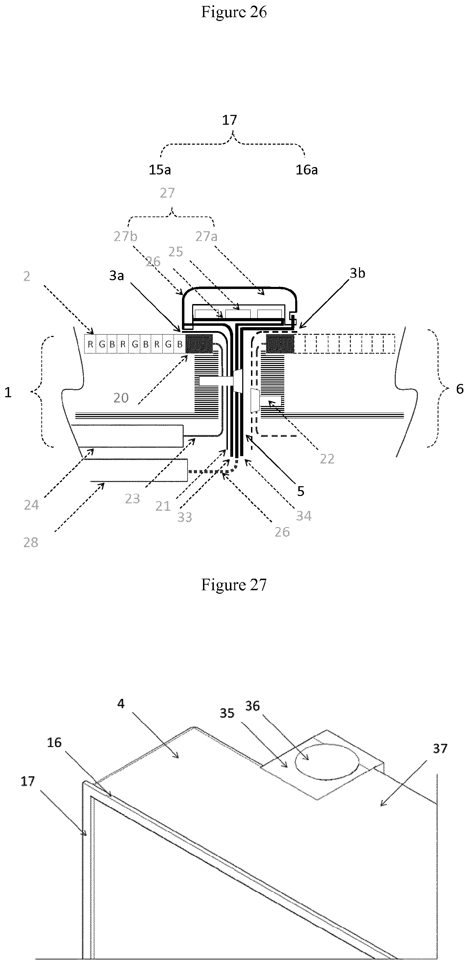

Figure 27. Diagram after the "spliced seamless screen" of the present invention is spliced with the adjacent display screens;
Figure 28. Diagram for an "abutting platform" and an "integral frame" of the "spliced seamless screen" of the present invention;

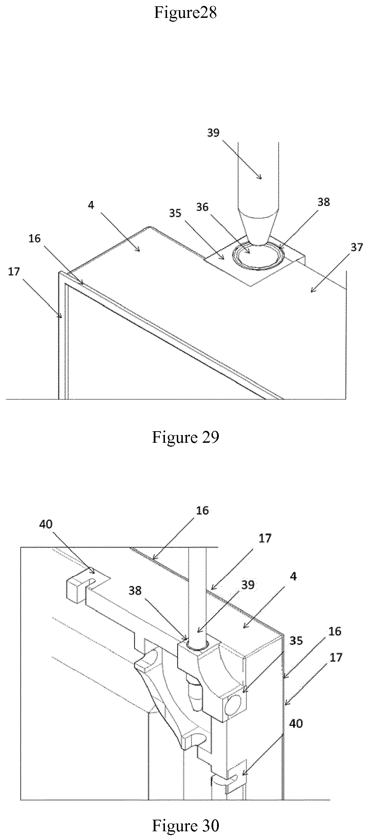

Figure 29. Diagram for a "guide sleeve" and a "guide pillar" of the "spliced seamless screen" of the present invention;
Figure 30. Diagram that the "guide pillar" of the present invention penetrates through the "guide sleeve";

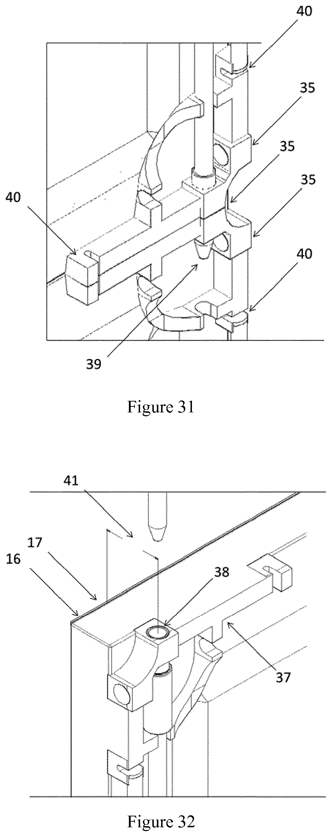

Figure 31. Diagram for back vision that the "guide pillar" of the "spliced seamless screen" of the present invention penetrates through the upper and lower spliced screens;
Figure 32. Diagram for control of front and rear "meshed" positioning dimensions when splicing the "spliced seamless screen" of the present invention;

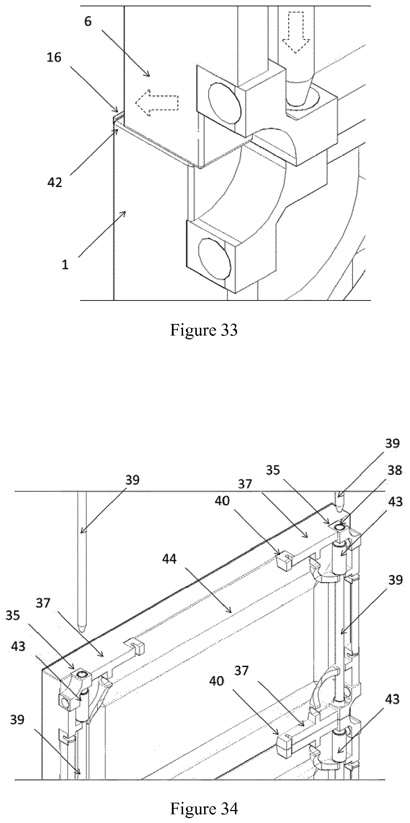

Figure 33. Diagram for "meshing" of a "bulge" of the "spliced seamless screen" and the adjacent display screens of the present invention;
Figure 34. Diagram after the "spliced seamless screen" of the present invention is spliced with the adjacent display screens;

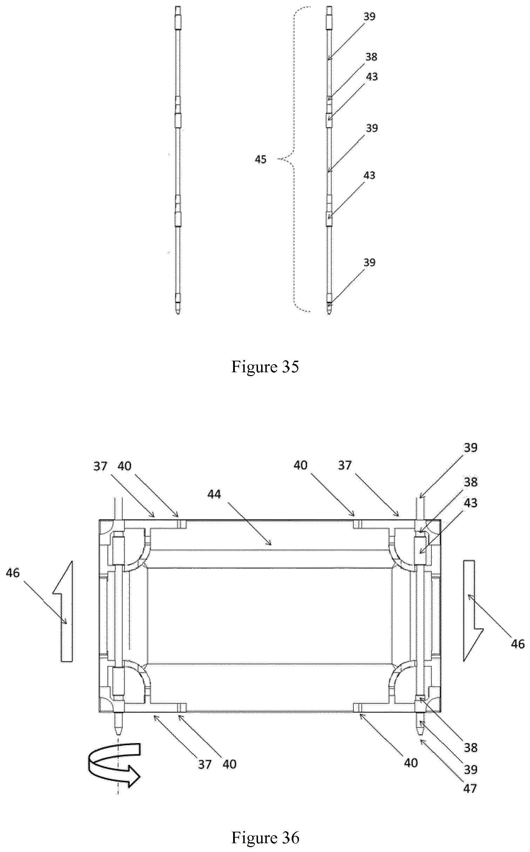

Figure 35. Diagram for "through shafts" of the present invention;
Figure 36. Diagram for "shearing resistance" of the "integral frame" of the present invention and its rotation around the left "through shaft";

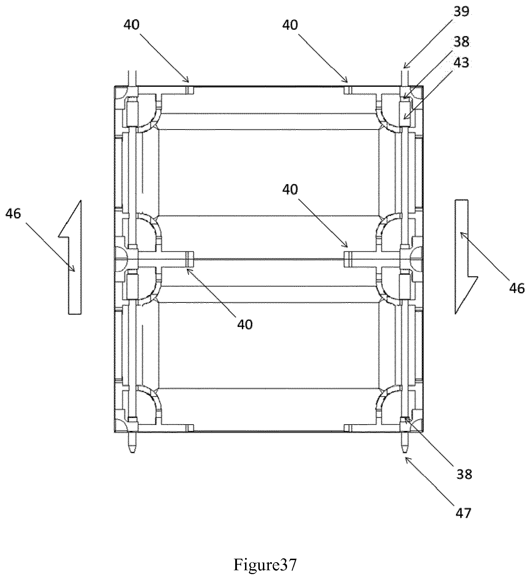

Figure 37. Diagram for "shearing resistance" of a column of the present invention;

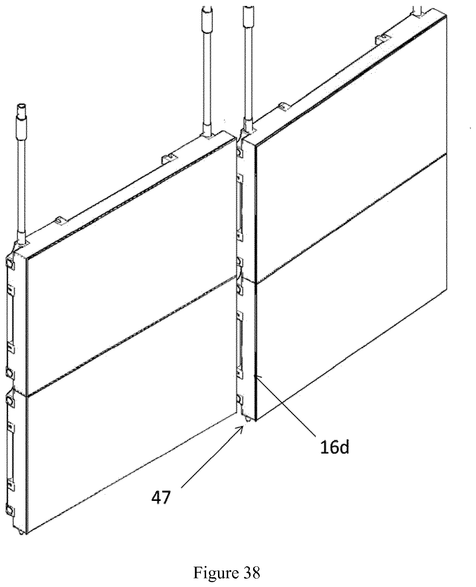

Figure 38. Diagram for rotation of the column of the "spliced seamless screen" of the present invention;

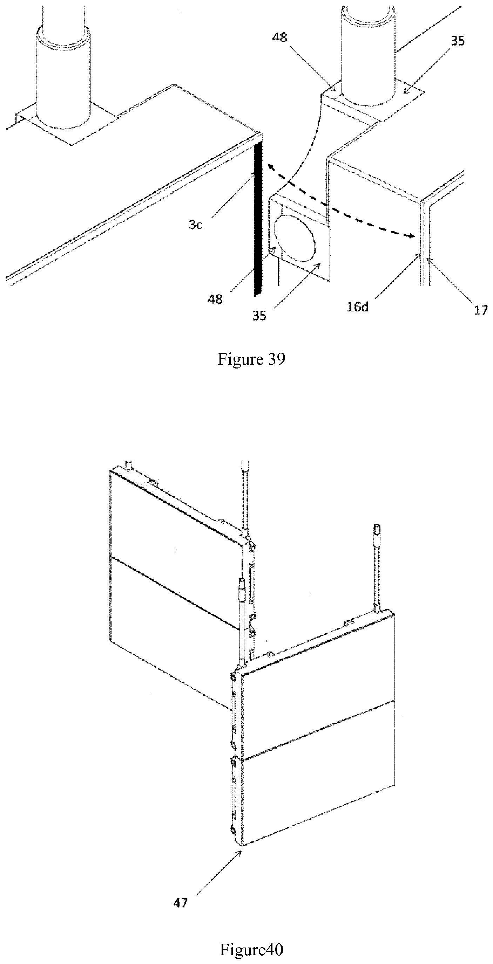

Figure 39. Diagram for "disengagement" of the "bulge" of the present invention from the "joints/seams on the screen surface" of the adjacent display screens; and
Figure 40. Diagram for a maintaining space obtained by a back of the column of the "spliced seamless screen" of the present invention.

### Detailed Description of Embodiments

A "fully seamless" video wall system comprises a video wall formed by display screens arranged in a matrix, and is characterized in that: joints/seams between all adjacent display screens are covered by an "active display bar" with a pixel, i.e., "complete pixel coverage"; and the active display bar not only covers "joints/seams between screens, but also covers "joints/seams on a screen surface", and is a kind of screen with "merging" treatment as an integrated display, namely that two "joints/seams on the screen surface" and one "joint/seam between screens" subordinated to the two adjacent display screens are not separately treated and displayed even if the natures, positions and auxiliary screen bodies of the three joints/seams are different, and also i.e., "display regions" of the display screen are effectively integrated in display by only one " integrated" active display bar to form an original video image. The active display bar can be "rectangular", in addition to be "cross-shaped"; and grid lines formed by the joints/seams between the display screens are covered by a plurality of rectangular active display bars arranged in a matrix, and the same as that of the "cross-shaped" active display bar, the "rectangular" active display bar is a kind of screen with "merging" treatment as an integrated display and used for covering the "joints/seams between screens" and the "joints/seams on the screen surface" at the same time. A new display area is formed by the "rectangular active display bar" and the display region of the original display screen, and biased with the display region of the original display screen, or with the screen body of the original display screen. The active display bar, with its insideportion, covers/overlaps "bezels/frames" of two right-angle sides of the display screen itself inside the boundary of the screen body, and bulges at two sides of the part outside the boundary of the screen body of the active display bar(s) cross/overlap the "joints/seams between screens" and cover "bezels/frames" of the two adjacent display screens. "Bezel/frames" left on an opposite angle of the "rectangular active display bar(s)" wait to be covered/overlapped by the "rectangular active display bar" of another group of adjacent spliced screen, and the "rectangular active display bar" is integrated into the display screen itself. The new display area takes initial display of two sides without "rectangular active display bar" in the display region of the original display screen as a basic and starting line, and the video images are "unidirectionally" amplified and filled towards the boundary with the "rectangular active display bar" in the new display area. A section of the built "rectangular active display bar" is in a "T"-shaped structure, and a flexible circuit of "coverage" pixel included by the "rectangular active display bar" is "T"-shaped and stretched down from the middle part of a pixel matrix.Two layers of steel plates are arranged inside and outside the built "rectangular active display bar", an outside upper bent opening faces outwards, and an inside upper bent opening faces inwards. The outside upper bent opening and the inside upper bent opening are connected with a "holding cover" through "hooks" and"feet" respectively; a "T" section is built, the "hooks" of the "holding cover" can be disconnected after the outside steel plate of the "rectangular active display bar" rotates towards the screen body "outside the boundary", and the flexible circuit and the pixel matrix thereof are taken down; and when the"hooks" are buckled to rotate towards "inside the boundary" of the screen body and fastening with the inside steel plate, the "holding cover" can be "locked", so that the "holding cover" has no offset up and down and inside and outsiderelative to the same and also has no deflection relative to a horizontal section of the same, thereby, a "T"-shaped stable "rectangular active display bar" is formed and integrated on the display screen. The "holding cover" is in a bi-color structure, the entity of the "holding cover" is "milky white" light-diffusion and nonopaque materials, and the top and surfaces of two sides of the "holding cover" are "black" or close to be "black"; and the black cover is very thin, so that the "holding cover" of the black cover is "black" when thepixel is not luminescent, and does not fully shield the light of the pixel when the pixel is luminescent, thereby guaranteeing that the display images can be fully displayed on the pixel matrix. In order to ensure that "bulges" can completely cover the "meshed" "joints/seams on the screen surface" of the adjacent spliced screens, an accurate positioning system is arranged, 2 pairs of "abutting platforms" and 2 pairs of "locking platforms" are arranged on the structure of a back of the screen body up and down and from side to side respectively, and respectively used for "positioning" and "locking", for the installation of eithera " screen in landscape" ora " screen in portrait". The abutting platform is characterized in that: a precision "guide sleeve" is arranged in the "abutting platform" and taken as "positioning" and "connection" between column screens, a "guide pillar" penetrates through a "guide sleeve" and the "guide sleeve" and the "guide pillar" are connected into "through shafts" connecting the columns of the display screen by a "lock sleeve"; and when installing and when the "guide pillar" with a taper head penetrates through the "guide sleeve" of the adjacent display screens from the "guide sleeve" of one display screen, the "bulge" of the display screen is accurately "meshed" with thefront and rear of the "rectangular active display bar" of another screen, and mean while, the "bulge" is not damaged when splicing. While the "front maintenance and front installation" of the constructed "spliced seamless screen": the column of the video wall rotates in a horizontal plane around vertical "through shafts" in a "whole column" or "whole column segmentation" manner, so that the "bulge" of the column obtains front and rear installation and maintenance spaces of the screen body with the way of disconnecting the "joints/seams on the screen surface" of the adjacent columns in the "whole column" or the "whole column segmentation" manner in a vertical direction. In order to guarantee the strength and rigidity that the video wall rotates around the vertical "through shafts" in the "whole column" or the "whole column segmentation" manner in the horizontal plane, a "integral frame" structure and an "anti-shearing structure" by taking a cover plate on the back of the screen body as a "shear web" are arranged behind the screen body; and the column of the video wall is built into "column" shearing resistance by the "through shafts" and the "locking platform", so that the column can rotate in the "whole column" or the "whole column segmentation" manner, without damaging the display screen.

When the present invention is implemented, as shown in Figure 16, a "rectangular active display bar" 17 is constructed, "bezels/frames" 3a and 3d (not listed due to overlaying) of two right-angle sides of a display screen 1 itself are covered at inner sides 15a and 15d of two sides of the "rectangular active display bar" 17, two sides 16a and 16d of outer sides are protruded outside the boundary 4 of the screen body of the display screen itself1, two "bulges" are formed and used for "covering" "bezels/frames" 3b and 3c of the two adjacent display screens " overlapping" the "joints/seams between screens" (as shown in 105 of Figure 6), the "bezels/frames" 3b and 3c reserved on the opposite angle of the "rectangular active display bar" are kept unchanged and waited to be "covered/overlapped" by the "rectangular active display bar" 17 of another group of adjacent spliced screens 6, and the "rectangular active display bar" 17 is integrated on the display screen 1 itself; and the width of 15a plus 16a (similarly, 15d plus 16d) is greater than or equal to the sum of the width of 3a, shown in Figure 11, ( 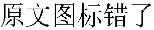 ) plus 3b, (wherein 15a and 16a, similarly, 15d and 16d, are " integral" of "cross-shaped" or "rectangular" "active display bar" 17 and an indivisible part, and divided with the boundary 4 of the screen body of the display screen, for the sake of simple description in the present invention), so that the video wall constructed with the method of the present invention is in the display region of the same, i.e. **"complete pixel coverage"** display system without the "joints/seams on the screen surface" 3a, 3b, 3c and 3d and the "joints/seams between screens" (as shown in 105 of Figure 6). (Except for the two adjacent edges 3b and 3c without "coverage" pixel in Figure 16, wherein the two edges are "pushed" to the outermost side of the video wall, namely, outside the display area of the video wall).

As shown in Figure 17, thepresentinvention is characterized in that: a "rectangular active display bar" 17 with "T"-shaped section is constructed and used for combining at the top left corner of the display screen 1; the "joints/seams on the screen surface" 3a and 3d of the display screen 1 itself are completely "covered" by inner sides 15a and 15d of the screen body of the rectangular active display bar; the "bulges" 16a and 16d of which the outer sides are "protruded" from the boundary 4 of the screen body of the display screen can completely cover (a) the sum of the width of the "joints/seams on the screen surface" 3b and 3c of the adjacent display screens 6, and (b)the width of the possible "joints/seams between screens" (as shown in 105 of Figure 6), namely, the "joints/seams between screens", as shown in 105 of Figure 6, are "completely covered by the pixel", and the display screen built in this way is a "spliced seamless screen". (Wherein: 15d, 16d and 3c are not listed due to a vertical case diagram of the section; and a blank is reserved among 17 and 3a and 3b up and down for clear expressing, but 17 and 3a and 3b are pasted together in specific implementation).

The "spliced seamless screen" (rear view) is shown in Figure 18: 4 refers to the boundary of the screen body of the display screen 1, 16a and 16d refer to the "bulges" of the "rectangular active display bar", 18 and 19 in Figure 18 refer to "short openings" of the "rectangular active display bar" 17, and the positions of the "short openings" are just meshed with the "rectangular active display bar" 17 of another "spliced seamless screen". In this way, the "joints/seams between screens" (as shown in 105 of Figure 6) of the "spliced seamless screen" of the present invention is certainly close to the position of the boundary 4 of the screen body of the display screen behind the "bulges" 16a and 16d, and will not be seen in thefront of the video wall, as shown in Figure 19, thereby achieving the purpose that the "joints/seams between screens" are "completely covered by the pixel", and solving the problem of the "joints/seams between screens" fundamentally.

In specific implementation, as shown in Figure 20, the typical section of the display screen is shown in Figure 1, wherein 2 refers to the "display region" of the display screen, 20 refers to a "transmission edge" of video signals and is used for transmitting the signals and controlling the display of the pixel, 21 refers to a "structural frame" and is used for keeping a display panel 2 on the display screen 1 and keeping that pixel circuits 23 and 22 are fasteners, and 23 refers to a display electronic circuit of a display screen 2, wherein the "superposition" width of 20 and 21 is regarded as the "joint/seam on the screen surface" 3a.

As shown in Figure 21, when building the "T"-shaped "rectangular active display bar" 17, the presentinvention is characterized in that: the flexible circuit is "T"-shaped, wherein 25 refers to "implanted" pixels (the pixels can be composed of an LED dot matrix, an OLED bar and a QLED bar), and 26 refers to the flexible circuit driving the pixels and has the characteristic of stretching down from the middle part of the pixel matrix, rather than from the side of the same. To combine the "rectangular active display bar" 17 on the display screen 1, a "holding cover" 27 is arranged at the top of the "rectangular active display bar" 17. Meanwhile, a row of " feet" 31 with a certain interval is arranged at the left side (inside) of the "holding cover" 27, and a row of "hooks" 32 with a certain interval is arranged at the right side (outside) of the "holding cover" 27 (the reason of calling the "hooks" is that the "hooks" are not "grooves").

As shown in Figure 22, the present invention is characterized in that: the "holding cover" 27 is in the "bi-color" structure; the entity of the "holding cover" is "milky white" light-diffusion and nonopaque materials, as shown in 27a (the ratio of the light-diffusion to the nonopaque can be adjusted according to an actual display effect); and the top and surfaces of both sides of the "holding cover" are "black" or close to "black", as shown in 27b. The black cover is very thin, so that the "holding cover" 27 is "black" when thepixel is not luminescent, and does not fully shield the light of the pixel when the pixel is luminescent, thereby guaranteeing that the display images can be fully displayed in the pixel matrix.

In this way, the pixel is converted into "surface display" from "point display" by the entity 27a of the "holding cover"; and mean while, the contrast of the video images is improved by virtue of the black layer 27b on the surface of the "holding cover", and "black" elements in the video images can be fully displayed, which is more thorough and vivid compared with materials with a "single-color structure" (the entity is as black as the surface). Mean while, because the black layer 27b is very thin, the surface color can be blacker and the contrast can be higher compared with the single-color structure.

As shown in Figure 23, in order to integrate the "rectangular active display bar" 17 into the display screen 1, two layers of angular "┐"-shaped and enough thin steel plates 33 and 34 are arranged at the inner and the outer sides of the "rectangular active display bar" 17. The present invention is characterized in that: the inner side of the upper bent opening of the two layers of angular "┐"-shaped steel plates faces inwards, and the outer side thereof faces outwards; and when vertical sides of the steel plates are closed up to one another, a "T" shape is formed with inside and outside bent openings above the same. A through hole is formed in the inward bent opening of the inside steel plate 33, so that the row of "feet" 31 inside the "holding cover" 27 can penetrate through the through hole in the bent opening by one-to-one correspondence and is connected with the same through hot pressing; a through hole is also formed in the bent opening of the outside steel plate 34 and is in one-to-one correspondence with the row of "hooks" 32 outside the "holding cover" 27; the outside steel plate 34 can be disconnected from the " hooks" 32 of the "holding cover" 27 and taken down after rotating an angle towards a direction "outside the boundary" of the display screen 1 along the row of "hooks" 32 outside the "holdingcover" 27, as shown in 34 of Figure 24; and conversely, when the outside steel plate 34 rotates an angle towards a direction "inside the boundary" of the display screen by buckling the row of "hooks" 32 outside the "holding cover" 27 and is closed up and fastened with the inside steel plate 33, the "holding cover" 27 is firmly "locked" by the inside and outside steel plates 33 and 34 below, namely that, the "holding cover" 27 is not biased up and down and inside and outside relative to the steel plate below, and is also not deflected/rotated relative to the horizontal level of the steel plate below, thereby forming a stable "T"-shaped structure.

When the outside steel plate 34 can build a firm "T"-shaped structure with the "holding cover" 27 and can be also taken down easily, it is possible to arrange or take out the "pixel matrix and the flexible circuit" 25 and 26 between the inside and outside steel plates 33 and 34, which provides the feasibility for manufacture, assembly, use and maintenance.

As shown in Figure 25, the "T"-shaped "rectangular active display bar" 17 built with the method of the present invention is fixed on the original display screen 1 by the fasteners 22, so that the two adjacent "joints/seams on the screen surface" 3a and 3d (not listed) of the original display screen 1 are just covered at the inner sides 15a and 15d of the rectangular active display bar, and the flexible circuit 26 connecting the pixel matrix 25 is connected to a control electronic circuit 28 (generally arranged behind the screen body of the display screen).

As shown in Figure 26, two "bulges" 16a and 16d (not listed) are built with the method of the present invention, besides that the "rectangular active display bars" 15a and 15d are "covered" at the two adjacent sides of the display screen 1 itself; and the bulges wait for 3b and 3c in the adjacent spliced screens 6, and the "complete pixel coverage" is built by thevideo wall spliced by the bulges on the back of the "bulges" 16a and 16d.

(Note: the sections of 15d, 16d and 3c are vertical to the case diagram and are not listed)

The spliced situation is shown in Figure 27, wherein 5 refers to the "joints/seams between screens" of the video wall, and is arranged at the position close to the boundary 4 of the display screen behind the "bulges" 16a and 16d, thereby achieving the purpose that the "joints/seams between screens" 5 (i.e., 105 in Figure 6) are subjected to "complete pixel coverage".

As shown in Figures 25 and 27, the "spliced seamless screen" including the "bulges" 16a and 16d is a "biased" screen. As shown in Figure 6, if the horizontal width and the vertical height of the "display region" 102 in the display screen 101 are respectively: H_{D0}, V_{D0}, and the overall widths 107 of the "joints/seams on the screen surface" 103a-103d at both sides of the adjacent spliced screens and the possible "joints/seams between screens" 105 in horizontal and longitudinal directions are respectively: G_{H}, G_{V}, then:

The outer diameter of the new "display area" is:
Horizontal: H_{D1} = H_{D0} + G_{H}
Longitudinal: V_{D1} = V_{D0} + Gv
Display center bias
Horizontal: G_{H}/2
Longitudinal: Gv / 2
(Wherein: D indicates the "display region"; and 0 and 1 indicate the original display screen and the "spliced seamless screen" respectively). The present invention is characterized in that: a "new" display screen is formed by the "rectangular active display bar" 17 and the "display region" 2 of the display screen 1 itself; the "new" display screen and the original "display region" 2 of the display screen 1 are "misplaced" or "biased" itself; and the display of the video images in the new display area takes the initial display of two sides 3b and 3c without the "rectangular active display bar" in the original "display region" 2 as the basic and starting line, and the video images "unidirectionally" fill towards the boundary with the "rectangular active display bar" 17 in the new display area and are amplified, as shown in Figure 15.

A set of positioning system is required when splicing, in order to guarantee that the "bulges" 16a and 16d of the display screen 1 in Figure 27 are accurately meshed with both sides 3b and 3c of the adjacent spliced screens 6 when splicing with the "spliced seamless screen" to achieve the display effect of "complete pixel coverage".

The positioning system plays a role of accurate positioning in a "standalone" splicing way, a "hanging form ceiling" splicing way and a "hanging against wall" splicing way.

The "standalone" splicing way means that: the display video wall can be stood up by itself with the support of a base thereof, and is free of surrounding supports at the height of about 4m away from the ground. The characteristics of the "standalone" splicing way are that an access and operation space is generally provided around the display video wall, and can be used for installation, use and maintenance.

The "hanging form ceiling" splicing way means that: the video wall is gotten off the ground and suspended from ceiling.

The "hanging against wall" splicing way means that: the video wall is directly installed by taking a wall as a main supporting structure. The characteristics of the "hanging against wall" splicing way are that the installation and maintenance space in which people can access is not generally provided in the rear of thevideo wall, which is generally called as front (end) installation and front (end) maintenance ("front installation", and "front maintenance").

A positioning system of the present invention in the "standalone" splicing:
1) The "abutting platform" positioning way is adopted for controlling the splicing size of the screen and sides thereof;
2) The "guide pillar and guide sleeve" positioning way is adopted for controlling the front and rear splicing size between screens;

As shown in Figure 28, the boundary 4 at the side of the display screen, the "rectangular active display bar" 17 and the "bulges" 16 thereof are installed and fixed on one "integral frame" structure 37; 35 refers to the "abutting platforms" controlling the splicing size of the side and is placed on the back of four corners of the display screen; two pairs of up and down corners, and two pairs of left and right corners and are respectively used for controlling the splicing size of the side when splicing the "horizontal screen" or the "vertical screen" respectively; and 36 refers to a "positioning hole" communicating the upper and lower and left and right "abutting platforms", and the "guide sleeve" 38 precisely ground can be placed in the positioning hole , as shown in Figure 29. The spliced "guide pillar" 39 of which the head has a taper penetrates through the "guide sleeve" 38 and is communicated with the two upper and the lower adjacent spliced screens, as shown in Figure 30. A pair of "locking platforms" 40 for controlling the vertical splicing size are arranged in the horizontal direction, and a pair of "locking platforms" 40 for controlling the horizontal splicing size are arranged in the vertical direction. The upper and the lower spliced display screens are shown in Figure 31. In Figure 32, the front and rear flatness of the display screen in the spliced videowall and the accuracy of the " integrated" between the "bulges" 16a and 16d and the two sides of the adjacent spliced screens 3b and 3c are decided by the consistency of the distance 41 from the center of the "guide sleeve" 38 to the "rectangular active display bar" 17 on the "integral frame" structure of each screen body.

According to the present invention, thefront and rear splicing flatness between screens is controlled with the cooperation of the "guide pillar" 39 and the "guide sleeve" 38, thereby ensuring the front and rear accurate meshing of the "bulges" 16a and 16d of the "rectangular active display bar" 17 and the two "joints/seams on the screen surface" 3b and 3c of the adjacent spliced screens; and meanwhile, the vertical and horizontal splicing sizes between the spliced screens are controlled by virtue of the "abutting platform" 35, thereby ensuring that the "bulges" 16a and 16d of the "rectangular active display bar" 17 are just covered on the two "joints/seams on the screen surface" 3b and 3c of the adjacent spliced screens completely, and achieving the purpose of "complete pixel coverage" of the "joints/seams between screens" 5.

As shown in Figure 33, the screen body 6 arranged later is firstly placed on the "abutting platform" 35 of the screen body 1 when splicing. However, at this time, the front and the rear of the upper and the lower screens are not "pasted" but have a distance, and the "guide sleeve" 38 is also not aligned vertically completely but slightly deflected, as shown in 42 of Figure 33. When the spliced "guide pillar" 39 with the taper gradually penetrates through the "guide sleeve" 38 of the upper and the lower spliced screens, the upper display screen 6 in Figure 33 is gradually moved forward therewith, thereby guaranteeing the accurate meshing of the upper display screen 6 and the "bulges" 16 of the lower display screen 1 in Figure 33 (the meshing of the left and right spliced screens is similar), and simultaneously preventing the "bulges" 16 from being damaged by the upper display screen 6 during installation.

After the display screen is spliced, the upper end of the spliced "guide pillar" 39 and the lower end of the "guide sleeve" 38 stretching out of the "abutting platform" 35 are locked with the rotating "lock sleeve" 43 in Figure 34, so that the spliced "guide pillar" 39, the "lock sleeve" 43 and the "guide sleeve" 38 are connected into a "through shaft" 45 communicating the column of spliced screens, as shown in Figure 35.

In this way, the "self-standing" "spliced seamless screen" can be accurately installed with the adoption of the above method, thereby guaranteeing the accurate meshing of the "bulges" 16a and 16d and the two sides 3b and 3c of the "uncovered" pixel of the adjacent spliced screens; and 15a and 15d can be completely covered on 3a and 3d, so that thevideo wall becomes a "fully seamless" display system" with "complete pixel coverage".

A positioning system of the presentinvention in the "hanging against wall" splicing:

The characteristics of the "hanging against wall" splicing way are that the spliced display video wall has the access and operation space on the front, top and bottom and left and right sides, but the back thereof is a wall used for supporting the display video wall. Therefore, the installation and maintenance cannot be generally implemented from the back of the display screen directly.

The usual method is to arrange a parallel mechanism, so that some screen can be "popped up" from the display video wall, and the screen is taken down or directly maintained by virtue of the "popped up" space at the back. A pair of "supporting points" can also be arranged on the single display screen along left and right sides, so that the single display screen can be "turned over" upwards one by one, thereby realizing installation and maintenance.

The problem of failing to access to the back of the display screen is well solved by the methods. However, a certain gap is required to be reserved between the screens to achieve the purpose of "popping up" and "turning over", which is in conflict with the target of having no "joints/seams between screens" to be achieved by the present invention.

Because the "bulges" 16a and 16d of the present invention are just covered on the two "joints/seams on the screen surface" 3c and 3d of the adjacent display screens, namely that, the "bulges" 16a and 16d of one display screen directly "press" the two "joints/seams on the screen surface" 3c and 3d of the adjacent display screens from the front, a set of new "hanging against wall" installation method is required to complete the need of "front installation" and "front maintenance".

As shown in Figure 34, a pair of two upper and lower "abutting platforms" 35 is arranged in the "horizontal direction" of the "back" of the "spliced seamless screen" of the present invention, and used for splicing in " Landscape" (correspondingly, two "abutting platforms" are also arranged in the "vertical direction" for splicing in Portrait"), while the spliced "guide pillar" 39 is connected with the "abutting platforms" 35 through the "guide sleeve" 38 in a cooperation manner. When the "abutting platforms" 35 are solidified on the "integral frame" structure 37 on the back of the screen body, and meanwhile, when a cover plate 44 on the back of the screen body is fastened on the "integral frame" 37, the "integral frame" becomes an "anti-shear frame", as shown in Figure 36. The "anti-shear frame" can bear a shear force 46 with a certain size, and the shear force 46 is not undertaken by the display screen, so that the display screen is not damaged accordingly.

As shown in Figure 35, the "through shafts" 45 built by the spliced "guide pillar" 39, the "lock sleeve" 43 and the "guide sleeve" 38 penetrate through the two sides of the back of the screen body vertically. When the original support is released by the supporting point 47 of the (back vision) right "through shaft" 45, the screen body can rotate with an angle around the (back vision) left "through shaft" 45 in the horizontal plane.

However, when the display screen is spliced up and down, and when the "locking platforms" 40 are locked with the fasteners up and down, a new "anti-shear frame" including the upper and lower screen bodies is formed by the "integral frame" 37 of the upper and the lower screens, and can also rotate with an angle around the (back vision) left "through shaft" 45 in the horizontal plane. The difference is that the "column" formed by the upper and the lower spliced screens is fastened together and rotates together as a whole, shown in Figure 37. Similarly, in this way, the whole "column" of the spliced display video wall can rotate with an angle along the (back vision) left "through shaft" 45 in the horizontal plane. As shown in Figure 38, in a 2x2 (row by column) spliced video wall, the second column of the "whole column" screen rotates with an angle along the (front vision) right "through shaft" 45 after the original support is released by the supporting point 47. At this time, the "bulge" 16d in the vertical direction and one "joint/seam on the screen surface" 3c of "uncovered" pixel of the adjacent spliced screens are disconnected from the original "meshing" position, as shown in Figure 39.

In order to guarantee that the display screen can rotate around the vertical "through shafts" 45, an oblique plane 48 is provided at the position that the "positioning hole" 36 of the "abutting platform" 35 for controlling the splicing size of the side is close to a center line, so that the "abutting platform" 35 can rotate by smoothly sliding over the "abutting platform" on the adjacent spliced screen when the spliced "column" rotates. (Note: the splicing of the vertical screen is similar).

However, when the "column" rotates with a big enough angle, and provides a new support for fixing on 47, the sufficient installation and maintenance space is obtained on the back of the screen body, and the display screens can be dismantled from top to bottom one by one like the "standalone" installation, and installed from bottom to top, as shown in Figure 40.

The video wall of the "spliced seamless screen" of the present invention rotates with an angle around the "through shafts" 45 built by the "guide pillar" 39, the "lock sleeve" 43 and the "guide sleeve" 38 in the "whole column" or the "whole column segmentation" manner, so that the longitudinal "whole column" or the "whole column segmentation" of the "bulge" 16d is disconnected from the "joints/seams on the screen surface" 3c of "uncovered" pixel of the adjacent spliced screens to obtain the installation and maintenance space; the "whole column" locks the upper and the lower screen bodies with the "locking platforms" 40; the cover plate 44 on the back of the screen body is an "shear web" and an "anti-shear frame" of the column is formed after the "shear web" is fastened with the "integral frame" 37, thereby ensuring that the display screen is not unilaterally sunken during rotation.

A positioning system of the present invention in the "hanging from ceiling" splicing:

The "hanging from ceiling" installation method means that the video wall can be firstly installed on the ground by the "standalone" way, and the upper and the lower, and the left and the right display screens are connected into a whole by the "locking platforms" 40 between the screens. Therefore, the video wall is easily "suspended".

So far, the installation method proposed by the present invention becomes a guaranteeing condition for feasibility of the solution of the "spliced seamless screen", and is an integral part of the present invention.

## Claims

1. A "fully seamless" video wall system, comprising a video wall formed by display screens arranged in a matrix, and is **characterized in that**: joints/seams between all adjacent display screens are covered by an "active display bar" having a pixel, i.e., "complete pixel coverage"; the active display bar not only covers "joints/seams between screens, but also covers "joints/seams on the screen surface", and is a kind of screen with "merging" treatment as an integrated display, namely that two "joints/seams on the screen surface" and one "joints/seams between screens" subordinated to the two adjacent display screens are not separately and individually treated and displayed even if the natures, positions and auxiliary screen bodies of the three joints/seams are different, and also namely that, "display regions" of the display screens are effectively integrated resulting in a fusion display by only one "integrated" active display bar to form an original video image.

2. The "fully seamless" video wall system according to claim 1, **characterized in that**:the active display bar can be "rectangular", in addition to be "cross-shaped"; and grid lines formed by the joints/seams between the display screens are covered/overlapped by a plurality of rectangular active display bars arranged in a matrix, and the same as that of the "cross-shaped" active display bars, the "rectangular" active display bar is a kind of screen with "merging" treatment as an integrated display and used for covering/overlapping the "joints/seams between screens" and the "joints/seams on the screen surface" at the same time.

3. The "fully seamless" display video wall system according to claim 2, **characterized in that**: a new display area is formed by the "rectangular active display bar" and the display region of the original display screen, and biased with the display region of the original display screen, or with the screen body of the original display screen; the active display bar, with its inside portion, covers "bezels/frames" of two right-angle sides of the display screen itself inside the boundary of the screen body, and bulges at two sides of the part outside the boundary of the screen body of the active display bar(s) cross/overlap the "joints/seams between screens" and cover "bezels/frames" of the two adjacent display screens; and "bezels/frames" left on an opposite angle of the "rectangular active display bar(s)" wait to be covered by the "rectangular active display bar" of another group of adjacent spliced screen, and the "rectangular active display bar" is integrated into the display screen itself.

4. The "fully seamless" video wall system according to claim 3, **characterized in that**: the new display area takes initial display of two sides without "rectangular active display bar" in the display region of the original display screen as a basic and starting line, and the video images are "unidirectionally" amplified and filled towards the boundary with the "rectangular active display bar" in the new display area.

5. The "fully seamless" video wall system according to claim 2, **characterized in that**:a section of the built "rectangular active display bar" is in a "T"-shaped structure, and a flexible circuit of "coverage" pixel included by the "rectangular active display bar" is "T"-shaped and stretched down from the middle part of a pixel matrix.

6. The "fully seamless" video wall system according to claim 2, **characterized in that**: two layers of steel plates are arranged inside and outside the built "rectangular active display bar", an outside upper bent opening faces outwards, and an inside upper bent opening faces inwards; the outside upper bent opening and the inside upper bent opening are connected with a "holding cover" through "hooks" respectively; a "T" section is built, the "hooks" of the "holding cover" can be disconnected after the outside steel plate of the "rectangular display bar" rotates towards the screen body "outside the boundary", and the flexible circuit and the pixel lattice thereof are taken down; and when the "hooks" are buckled to rotate towards "inside the boundary" of the screen body and fastening with the inside steel plate, the "holding cover" can be "locked", so that the "holding cover" has no offset up and down and inside and outside relative to the same and also has no deflection relative to a horizontal section of the same, thereby, a stable "T"-shaped "rectangular active display bar" is formed and integrated on the display screen.

7. The "fully seamless" video wall system according to claim 6, **characterized in that**: the "holding cover " is in a bi-color structure; the entity of the "holding cover" is "milky white" light-diffusion and nonopaque material; the top and surfaces of both sides of the "holding cover" are "black" or close to "black"; and the black cover is very thin, so that the "holding cover" presents "black" when thepixel is not luminescent, and does not fully shield the light of the pixel when the pixel is luminescent, thereby guaranteeing that the display images can be fully displayed in the pixel matrix.

8. The "fully seamless" video wall system according to claim 3, **characterized in that**:in order to ensure that the "bulges" can completely cover the "joints/seams on the screen surface" for "meshing" the adjacent spliced screens, an accurate positioning system is arranged; 2 pairs of upper and lower and left and right "abutting platforms" and 2 pairs of upper and lower and left and right "locking platforms" are arranged on the structure of a back of the screen body, and respectively used for "positioning" and "locking", for the installation of either a " screen in landscape" or a " screen in portrait"; the abutting platform is **characterized in that**: a precision "guide sleeve" is arranged in the "abutting platform" and taken as "positioning" and "connection" between column screens; a "guide pillar" penetrates through a "guide sleeve" and the "guide sleeve" and a "guide pillar" are connected into "through shafts" communicating the columns of the display screen by a "lock sleeve"; during installation, when the "guide pillar" with a taper head penetrates through the "guide sleeve" of the adjacent display screens from the "guide sleeve" of one display screen, the "bulges" of the display screen are accurately "meshed" with the front and rear of the "rectangular display bar" of another screen, and meanwhile, the "bulges" are not damaged when splicing.

9. The "fully seamless"video wall system according to claim 8, **characterized in that**: when the "front maintenance and front installation" of the "spliced seamless screen"is built: the column of the video wall rotates in a horizontal plane around vertical "through shafts" in a "whole column" or "whole column segmentation" manner, so that the "column of video wall obtains front and rear installation and maintenance spaces of the screen body,with the way of the vertical portion of "bulge(s)"coming away the "joints/seams on the screen surface" of the adjacent columns in the "whole column" or "whole column segmentation" manner;in order to guarantee the strength and rigidity in which the "whole column" or "whole column segmentation" of the video wall rotates around the vertical "through shafts" in the horizontal plane, a "integral frame" structure and an "anti-shearing structure" by taking a cover plate on the back of the screen body as a "shear web" are arranged behind the screen body; and the column of the video wall is built into "column" shearing resistance by the "through shafts" and a "locking platform", so that the column can rotate in the "whole column" or "whole column segmentation" manner, without damaging the display screen.
